# EUROPÄISCHE PATENTANMELDUNG

(11) **EP 1 162 549 A1**
(43) Veröffentlichungstag der Anmeldung: **12.12.2001**
(21) Anmeldenummer: 00110842.2
(22) Anmeldetag: 22.05.2000
(51) Int. Cl.: G06F 17/30, G06F 17/60

(54) **Anzeigen einer animierten, auf Benutzereingaben reagierenden Darstellung**

(71) Anmelder: Vista, New Media GmbH, 50670 Köln (DE)
(72) Erfinder: Fuzinski, Alexandra, 50670 Köln (DE); Meyer, Christian, 50670 Köln (DE)
(74) Vertreter: Dendorfer, Claus, Dr.

(57) **Zusammenfassung**

Ein Verfahren zum Anzeigen einer animierten, auf Benutzereingaben reagierenden Darstellung in einem Browserfenster eines an ein Computernetzwerk angeschlossenen Benutzerrechners (14) weist die Schritte auf, mehrere Kurzanimationen über das Computernetzwerk (12) zu laden, eine Benutzereingabe (82) zu analysieren (84) und diese Benutzereingabe (82) zu einer Animationssequenz zuzuordnen (86), die mehrere Kurzanimationen aufweist, auf die Kurzanimationen der Animationssequenz zuzugreifen (88) und die Animationssequenz als animierte Darstellung in dem Browserfenster anzuzeigen (90). Ein Computerprogrammprodukt und eine Vorrichtung weisen entsprechende Merkmale auf. Die Erfindung schafft eine Möglichkeit, eine animierte, auf Benutzereingaben reagierende Darstellung anzuzeigen, die einerseits eine hohe Ausdrucks- und Kombinationsvielfalt aufweist und andererseits die Belästigung für den Benutzer durch Datenübertragungsvorgänge und die damit verbundenen Wartezeiten gering hält. Vorzugsweise wird Erfindung in Anwendungen des E-Commerce als virtueller Berater und Verkäufer eingesetzt, wobei in bevorzugten Ausgestaltungen der Erfindung zumindest eine Möglichkeit zur Texteingabe und zur Sprachausgabe vorgesehen sein kann.

## Beschreibung

Die Erfindung betrifft ein Verfahren, ein Computerprogrammprodukt sowie eine Vorrichtung zum Anzeigen einer animierten, auf Benutzereingaben reagierenden Darstellung in einem Browserfenster eines an ein Computernetzwerk angeschlossenen Benutzerrechners. Die Erfindung kann beispielsweise eingesetzt werden, um im Zusammenhang mit dem elektronischen Handel über das Internet (E-Commerce) einen animierten und reaktiven virtuellen Berater und/oder Verkäufer bereitzustellen.

Durch die rasche und weltweite Verbreitung des Internet sind ungeahnte Anwendungsmöglichkeiten eröffnet worden. Diese betreffen im Moment primär den elektronischen Handel. Als zukünftige Entwicklung ist zu erwarten, daß immer komplexere Waren- und Dienstleistungsangebote, die immer größeren Beratungsbedarf bedingen, über das Internet oder andere Computernetzwerke zur Verfügung gestellt werden.

Gegenwärtig wird das Internet nur von einer Minderheit der Bevölkerung genutzt. Gründe dafür sind eine generelle Unerfahrenheit im Umgang mit Computern, die oftmals als unpersönlich und dadurch abschreckend empfunden werden. Insbesondere im Hinblick auf den elektronischen Handel kommen teilweise irrationale Ängste hinzu, zum Beispiel die Besorgnis, versehentlich ein ungewolltes Geschäft abzuschließen. Diese Befürchtungen sind um so stärker ausgeprägt, je komplexer das Internet-Angebot ist.

Es ist daher schon vorgeschlagen worden, die für viele Benutzer abschreckende Anonymität und Technizität des Internet dadurch zu verringern, daß animierte Figurendarstellungen angezeigt werden. Diese Figuren treten als virtuelle Berater oder Verkäufer auf. Dem Benutzer wird durch diese Maßnahme das Gefühl gegeben, sich in einem realen Geschäft oder Unternehmen zu befinden. Durch die animierte Darstellung wird somit das Interesse des Benutzers geweckt, und Ängste werden abgebaut. Auch für erfahrene Internet-Benutzer ist die Beratungsmöglichkeit insbesondere dann wichtig, wenn es sich um komplexe Angebote handelt. Überdies sind, wie bereits oben erwähnt, in zunehmendem Maße Internet-Angebote zu erwarten, die überwiegend oder ausschließlich aus einer Beratungsdienstleistung bestehen, beispielsweise bei der elektronischen Konsultation von Ärzten oder Anwälten.

Ein Beispiel für einen derartigen virtuellen Berater ist die Figur "Vee" der Anmelderin, die in dem Artikel "Lara Crofts Nachwuchs" vom Ralf Blittkowsky in der Zeitschrift c't, Heft 8/2000, Seiten 90-95 gezeigt ist. Um die Figur "Vee" nutzen zu können, muß der Benutzer jedoch zunächst ein umfangreiches Programm auf seinen Computer laden und als sogenanntes "Plug-In" in seinen Internet-Browser installieren. Das Programm enthält alle erforderlichen Steuerroutinen sowie die zur Anzeige der Figur "Vee" benötigten Grafikdaten.

Die internationale Patentveröffentlichung WO 99/56228 zeigt einen als animierte Figur dargestellten virtuellen Assistenten. Auch hier ist die Verwendung eines Plug-In vorgesehen.

Das Laden eines monolithischen Plug-In ist ein relativ aufwendiger und fehleranfälliger Prozeß. Es besteht die Gefahr, daß durch Inkompatibilitäten des Plug-In eine bestehende Installation beschädigt wird. Viele Benutzer lehnen aus diesen Gründen das Laden eines Plug-In ab und können dann das Internet-Angebot entweder nicht vollständig oder gar nicht nutzen. Auch ist die Programmierung eines Plug-In aufwendig und komplex, weil die Besonderheiten der einzelnen auf dem Markt befindlichen Internet-Browser berücksichtigt werden müssen.

Es ist daher Aufgabe der Erfindung, die genannten Probleme des Standes der Technik zumindest zum Teil zu vermeiden und eine Möglichkeit zu schaffen, eine animierte, auf Benutzereingaben reagierende Darstellung anzuzeigen, die einerseits eine hohe Ausdrucksvielfalt aufweist und andererseits die Belästigung für den Benutzer durch Datenübertragungsvorgänge und die damit verbundenen Wartezeiten möglichst gering hält. In bevorzugten Ausgestaltungen der Erfindung sollen überdies aufwendige und fehleranfällige Installationsvorgänge auf ein Mindestmaß reduziert oder ganz vermieden werden. In weiteren bevorzugten Ausgestaltungen soll eine möglichst geringe Wartezeit für den Benutzer zwischen dem Laden einer Internet-Seite und dem Beginn der animierten Darstellung erzielt werden.

Zur Lösung der erstgenannten obigen Aufgabe wird erfindungsgemäß ein Verfahren mit den Merkmalen des Anspruchs 1, ein Computerprogrammprodukt mit den Merkmalen des Anspruchs 9 und eine Vorrichtung mit den Merkmalen des Anspruchs 10 vorgeschlagen. Die abhängigen Ansprüche betreffen bevorzugte Ausgestaltungen der Erfindung.

Die Erfindung geht von der Grundüberlegung aus, die in Reaktion auf eine Benutzereingabe anzuzeigende Animationssequenz aus mehreren Kurzanimationen aufzubauen. Die verwendeten Kurzanimationen sind dabei bereits vorab über das Computernetzwerk geladen worden, wobei der Aufwand für das Übertragen der Kurzanimationen deutlich hinter dem bisher erforderlichen Aufwand zurückbleibt. Durch unterschiedliche Kombinationen der Kurzanimationen können komplexe und unterhaltsame Animationssequenzen gebildet werden.

Somit wird durch die Erfindung eine hohe Darstellungsvielfalt bei geringer Beanspruchung der Übertragungskapazitäten erreicht. Die erfindungsgemäße Lösung, Kurzanimationen zum Bilden der angezeigten Animationssequenzen zu verwenden, hat den Vorteil, daß erste Animationssequenzen schon sehr bald nach dem Beginn des Ladens der Kurzanimationen angezeigt werden können. In bevorzugten Ausgestaltungen kann daher das Laden der Kurzanimationen bei jeder Benutzersitzung oder sogar bei jedem Zugriff auf eine bestimmte Angebots-seite neu begonnen werden. Diese Ausgestaltungen unterscheiden sich besonders deutlich von der oben als Stand der Technik genannten Figur "Vee", die vor der ersten Benutzung mit allen Grafikdaten als Plug-In geladen und installiert werden muß.

In bevorzugten Ausführungsformen werden als "Kurzanimationen" einzelne Gesten verstanden, die auf unterschiedlichste Weise aneinandergereiht werden können. Beispiele für solche Einzelgesten sind Nicken, Zeigen links, Winken und so weiter. Vorzugsweise besteht jede Animation aus einer Abfolge von Einzelbildern, und eine Kurzanimation kann in manchen Ausführungsformen dadurch definiert sein, daß sie weniger als 200 oder weniger als 100 oder weniger als 50 unterschiedliche Einzelbilder aufweist. Dies schließt vorzugsweise nicht aus, daß beim Abspielen einer Kurzanimation manche Einzelbilder mehrmals angezeigt werden (z.B. in einer zyklisch durchlaufenen Schleife, so daß die Abspiellänge einer einzelnen Kurzanimation beliebig anwachsen kann). In anderen Ausführungsformen ist als definierendes Merkmal einer Kurzanimation ein vorgegebenes Datenvolumen bestimmt, das zum Beispiel so bemessen ist, daß jede Kurzanimation bei durchschnittlichen Bedingungen in weniger als 1 Minute oder in weniger als 30 Sekunden oder in weniger als 15 Sekunden übertragen wird.

Die in dem Browserfenster angezeigte Animationssequenz ist vorzugsweise eine Aneinanderreihung von Kurzanimationen, um somit eine längere und aussagekräftigere Darstellung zu erzielen.

Um die erfindungsgemäße Funktionalität bereitstellen zu können, ist im Regelfall ein Steuerprogramm erforderlich. Allgemein soll nicht ausgeschlossen sein, daß dieses Steuerprogramm als Browser-Plug-In ausgestaltet ist und zunächst vom Benutzer installiert werden muß. Wegen der oben bereits geschilderten Probleme wird jedoch eine Ausgestaltung bevorzugt, bei der das Steuerprogramm unmittelbar vor dem Laden der Kurzanimationen über das Computernetzwerk in den Browser geladen wird. Beispielsweise kann das Steuerprogramm ein Applet sein, insbesondere ein in der Programmiersprache Java geschriebenes Applet, das von einer entsprechenden virtuellen Java-Maschine des Browsers ausgeführt wird.

Ein solches als Applet ausgestaltetes Steuerprogramm steigert die Benutzerfreundlichkeit und damit die Akzeptanz der Erfindung erheblich. Da die heute üblichen Browser Java-Applets erst mit dem ersten Zugriff auf eine Internet-Seite laden, ist auch in diesem Zusammenhang der erfindungsgemäße Einsatz von Kurzanimationen Voraussetzung für die Praktikabilität der vorgeschlagenen Weiterentwicklung. Müßten vollständige Animationssequenzen (und nicht nur Kurzanimationen) übertragen werden, dann wäre die Dauer zwischen dem ersten Seitenaufruf des Benutzers und dem Anzeigen der ersten Animationssequenz so lang, daß wiederum die Benutzerakzeptanz leiden würde.

In Ausgestaltungen, bei denen das Steuerprogramm beispielsweise ein Java-Applet ist und daher erst mit dem eigentlichen Seitenaufruf geladen wird, ist vorzugsweise vorgesehen, daß das Laden der Kurzanimationen seinerseits von einem Modul des gerade geladenen und gestarteten Steuerprogramms gesteuert wird. Durch diese Maßnahme kann ein Übertragungsformat und/oder -protokoll verwendet werden, das besonders gut an die Gegebenheiten angepaßt ist und beispielsweise das Laden der Kurzanimationen im Hintergrund ohne Störung des Benutzers ermöglicht. Vorzugsweise werden die Kurzanimationen gemäß einer vorbestimmten Prioritätsreihenfolge geladen. Diese Prioritätsreihenfolge kann insbesondere durch den Informationsanbieter so festgelegt worden sein, daß häufig verwendete Kurzanimationen möglichst bald nach dem ersten Seitenzugriff zur Verfügung stehen.

Durch die Aufzählungsreihenfolge der Merkmale in den Ansprüchen soll generell keine Einschränkung des Schutzbereichs bewirkt werden. So ist in Ausführungsalternativen vorgesehen, die Verfahrensschritte in anderer Reihenfolge oder ganz oder teilweise parallel oder ineinander verzahnt (quasi-parallel) auszuführen. Besonders bevorzugt sind Ausführungsformen, in denen die Schritte, eine Benutzereingabe zu erkennen und zu analysieren, diese Benutzereingabe einer Animationssequenz zuzuordnen, auf die in der Animationssequenz enthaltenen Kurzanimationen zuzugreifen und diese Kurzanimationen als animierte Darstellung in dem Browserfenster anzuzeigen, in einem fortlaufenden Eingabe-Reaktions-Zyklus ausgeführt werden. Dies erfolgt vorzugsweise so lange, wie die aktuelle Angebots-Seite im Browserfenster angezeigt wird.

Das Laden der Kurzanimationen über das Computernetzwerk wird vorzugsweise möglichst weitgehend parallel mit dem gerade beschriebenen Eingabe-Reaktions-Zyklus ausgeführt. Durch diese Maßnahme wird erreicht, daß die gewünschte Benutzerinteraktion schon kurz nach dem ersten Seitenzugriff möglich ist.

So lange noch nicht alle Kurzanimationen in den Arbeitsspeicher des Benutzerrechners geladen sind, kann es vorkommen, daß bei einem parallel ausgeführten Eingabe-Reaktions-Zyklus eine noch nicht vorhandene Kurzanimation benötigt wird. In manchen Ausführungsalternativen ist vorgesehen, in diesem Fall die benötigte Kurzanimation mit hoher Priorität nachzuladen. Bevorzugt wird jedoch die in der Animationssequenz vorgesehene Kurzanimation durch eine bereits vorhandene Kurzanimation ersetzt. Dadurch wird eine unmittelbare Reaktivität der animierten Darstellung erreicht. Anfangs mag das zur Verfügung stehende Gestikrepertoire der animierten Darstellung noch beschränkt sein; es wächst jedoch mit zunehmenden Fortschritt des Ladevorgangs an, bis schließlich die volle Ausdrucksfähigkeit der animierten Darstellung erreicht ist.

Bei dem Ersetzungsvorgang wird in manchen Ausführungsformen die fehlende Kurzanimation durch eine vorhandene Animation ersetzt, die nach vorbestimmten Kriterien (Länge, Inhalt, Typ, ...) möglichst ähnlich ist. In einer einfacheren Alternative wird dagegen eine fest vorgegebene, generische Animation (z.B. Blinzeln) verwendet, die zu Beginn des Ladevorgangs mit hoher Priorität in den Arbeitsspeicher des Benutzerrechners übertragen wurde.

In bevorzugten Ausführungsformen erfolgt die Zuordnung der Benutzereingabe zu der Animationssequenz über ein Skript oder eine Kombination mehrerer Skripten. Das Skript bzw. die Skripten ordnet/ordnen Schlüsselwörter der Benutzereingabe einer in Reaktion darauf wiederzugebenden Animationssequenz zu. Somit kann der Informationsanbieter mit relativ geringem Aufwand komplexe Informationsangebote und Animationssequenzen generieren.

Vorzugsweise ist vorgesehen, daß die Benutzereingabe ferner einer Ausgabe zugeordnet wird. Die Ausgabe kann beispielsweise ein zusammen mit der animierten Darstellung (z.B. in einer Sprechblase) angezeigter Text oder eine Sprachausgabe sein. Alternativ oder zusätzlich zu der Ausgabe können in Reaktion auf die Benutzereingabe auch andere Aktionen, beispielsweise ein Sprung auf eine andere Angebotsseite, erfolgen. Insgesamt kann durch solche Ausgabemöglichkeiten die animierte Darstellung besonders gut als virtueller Berater (Kundenservice, Beratungsdienstleistungen) und Verkäufer (E-Commerce) eingesetzt werden.

In bevorzugten Ausführungsformen sind das Computerprogrammprodukt und die Vorrichtung mit Merkmalen weitergebildet, die den gerade beschriebenen und/oder den in den abhängigen Verfahrensansprüchen genannten Merkmalen entsprechen.

Weitere Merkmale, Vorteile und Aufgaben der Erfindung gehen aus der folgenden detaillierten Beschreibung mehrerer Ausführungsbeispiele und Ausführungsalternativen hervor. Die schematischen Zeichnungen zeigen:
Fig. 1 eine überblicksartige Darstellung eines Client-Server-Systems zur Ausführung der Erfindung,
Fig. 2 ein Blockdiagramm der in einem Steuerprogramm der Erfindung ablaufenden Prozesse,
Fig. 3 eine beispielhafte Ablaufdarstellung des erfindungsgemäßen Verfahrens, und
Fig. 4 eine schematische Darstellung von Kurzanimationen und einer daraus gebildeten Animationssequenz.

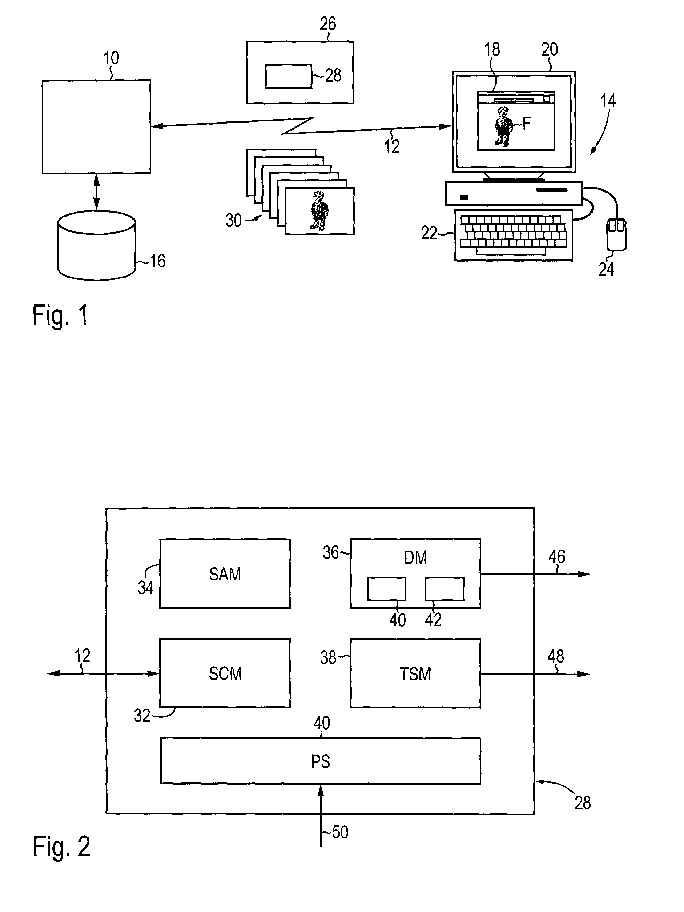

Bei dem in Fig. 1 gezeigten System ist ein Server 10 über ein Computernetzwerk 12 mit einem Benutzerrechner 14 (Client) verbunden. Der Server 10 ist ein leistungsfähiger Rechner, der beispielsweise das unter dem Namen "Apache" bekannte Internet-Serverprogramm ausführt und auf eine Vielzahl von Internetseiten zugreift, die in einem Massenspeicher 16 gespeichert sind. Das Computernetzwerk 12 ist beispielsweise das Internet, wobei die Kommunikation zwischen dem Server 10 und dem Benutzerrechner 14 in an sich bekannter Weise über die diversen Protokolle des World Wide Web (z.B. http) erfolgt.

Der Benutzerrechner 14 ist ein üblicher persönlicher Computer mit einem Betriebssystem wie beispielsweise einem der unter den Marken Microsoft Windows oder Linux bekannten Systeme. Der Benutzerrechner 14 führt einen an sich bekannten Internet-Browser mit Unterstützung für die Programmiersprache Java aus, beispielsweise einen der unter den Marken Netscape Navigator oder Microsoft Internet Explorer bekannten Browser. Ein Browserfenster 18 wird auf einem Bildschirm 20 des Benutzerrechners 14 angezeigt, und der Benutzer kann Eingaben an den Benutzerrechner 14 mittels einer Tastatur 22 und/oder einer Maus 24 durchführen.

Bei dem Betrieb des in Fig. 1 gezeigten Systems überträgt der Server 10 eine Vielzahl von Datenelementen an den Benutzerrechner 14. Im Zusammenhang mit der Erfindung ist hierbei zunächst eine Internetseite 26 zu nennen, die ein als Java-Applet ausgestaltetes Steuerprogramm 28 enthält. Nach dem Start des Steuerprogramms 28 im Browser des Benutzerrechners 14 werden ferner mehrere Kurzanimationen 30 und sonstige Daten (z.B. Initialisierungsdaten, Skripten, Standardeinstellungen etc.) zum Benutzerrechner 14 übertragen.

In dem hier beschriebenen Ausführungsbeispiel ist eine Kurzanimation (und die daraus zusammengesetzte Animationssequenz) eine Abfolge von Einzelbildern, die in dem Browserfenster 18 so schnell hintereinander angezeigt werden, daß sie vom Auge des Benutzers als flüssige Bewegung wahrgenommen werden. In Fig. 1 ist hierzu beispielhaft ein Einzelbild aus einer animierten Darstellung F eines virtuellen Beraters und/oder Verkäufers gezeigt. Gegenwärtig wird eine Darstellungsgeschwindigkeit von ungefähr 8 bis 15 Bildern pro Sekunde als ausreichend angesehen.

Bei der Übertragung einer Kurzanimation 30 über das Computernetzwerk 12 wird im Ergebnis ebenfalls eine Folge von Einzelbildern übermittelt. Es werden jedoch mehrere an sich bekannte Komprimierverfahren eingesetzt, um das zu übertragende Datenvolumen zu minimieren. Diese Komprimierverfahren nutzen sowohl redundante Informationen innerhalb der einzelnen Bilder aus, als auch die Tatsache, daß sich aufeinanderfolgende Bilder einer Kurzanimation 30 in der Regel nur in geringem Maße unterscheiden. Die komprimierte Übertragung von Bildfolgen und Animationen ist an sich bekannt und nicht Gegenstand der vorliegenden Erfindung.

In Fig. 2 sind die Hauptmodule des Steuerprogramms 28 dargestellt, die in ihrem Zusammenwirken die erfindungsgemäße Funktionalität erzielen. Es handelt sich dabei um einen Server-Verbindungsmanager 32 (server connection manager - SCM), einen Animationsmanager 34 (streaming animation manager - SAM), einen Anzeigemanager 36 (display manager - DM), einen Text/Sprach-Manager 38 (text-to-speach manager - TSM) und einen Parser 40. Der Anzeigemanager 36 weist ein Untermodul 40 für die Figurendarstellung sowie ein Untermodul 42 für die Sprechblasendarstellung auf. Alle genannten Module stehen untereinander sowie mit einer Animationsliste und weiteren im Arbeitsspeicher gehaltenen Datenstrukturen in Verbindung. Die internen Datenkommunikationswege des Steuerprogramms 28 sowie die verwendeten Datenstrukturen sind in Fig. 2 der Klarheit halber nicht dargestellt und sind in ihren Einzelheiten nicht Gegenstand der vorliegenden Erfindung.

Zur externen Datenkommunikation steht der Server-Verbindungsmanager 32 (und über diesen auch der Animationsmanager 34) mit dem Computernetzwerk 12 in Verbindung. Der Anzeigemanager 36 vermag über eine geeignete Anzeigeschnittstelle 46 eine graphische Darstellung auszugeben, die dann im Browserfenster 18 angezeigt wird. Der Text/Sprach-Manager 38 vermag über eine Ausgabeschnittstelle 48 Informationen für eine Sprachausgabe an ein externes, vom Benutzerrechner 14 ausgeführtes Sprachausgabeprogramm (in den Zeichnungen nicht gezeigt) auszugeben. In Ausführungsalternativen enthält der Text/Sprach-Manager 38 selbst schon die Spracherzeugungsfunktionalität. Die Ausgabeschnittstelle 48 kann dann eine Schnittstelle zur Übertragung von Audiodaten beispielsweise an eine Soundkarte des Benutzerrechners 14 sein.

Der Parser 40 erhält die Benutzereingaben über eine Eingabeschnittstelle 50. Generell ist es Aufgabe des Parsers 40, die Eingaben des Benutzers auf Grundlage von Stichwortdaten zu analysieren und gefundene Stichworte zu bewerten, um insgesamt eine aufgrund der Benutzereingabe auszuführende Reaktion zu bestimmen. Im vorliegend beschriebenen Ausführungsbeispiel sind die Benutzereingaben ausschließlich Zeichenfolgen, die der Benutzer an der Tastatur 22 eintippt. In Ausführungsalternativen ist jedoch vorgesehen, durch eine zusätzliche Spracherkennungssoftware auch eine Möglichkeit zur sprachgesteuerten Bedienung des Systems zu schaffen. Ferner kann vorgesehen sein, Mausbewegungen und/oder andere Aktionen des Benutzers auszuwerten und dem Steuerprogramm 28 über die Eingabeschnittstelle 50 zur Verfügung zu stellen.

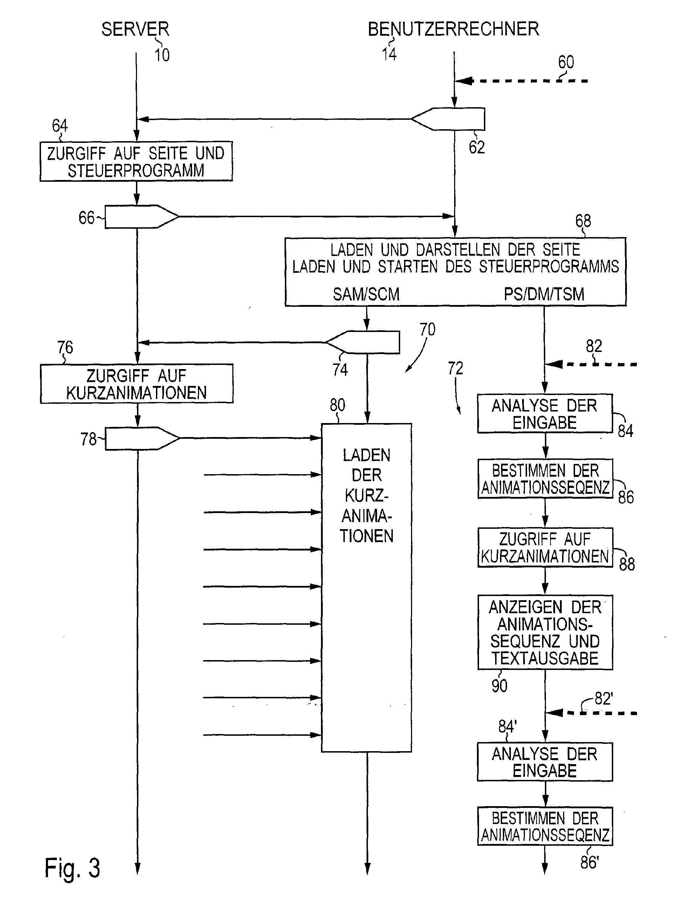

In dem Sequenzdiagramm von Fig. 3 ist ein beispielhafter Ablauf des erfindungsgemäßen Verfahrens und der Kommunikation zwischen dem Server 10 und dem Benutzerrechner 14 über das Computernetzwerk 12 gezeigt. Der Ablauf beginnt mit einer Benutzeranforderung 60, die beispielsweise darin bestehen kann, daß der Benutzer die Adresse (URI) einer gemäß der vorliegenden Erfindung ausgestalteten Internetseite 26 über die Tastatur 22 eingibt.

Der auf dem Benutzerrechner 14 laufende Browser sendet daraufhin eine Seitenanforderung an den Server 10 (Sendeaktion 62). Der Server 10 greift seinerseits im Massenspeicher 16 auf die Internetseite 26 zu (Schritt 64). Dann überträgt der Server 10 die Internetseite 26 und das darin enthaltene Steuerprogramm 28 an den Benutzerrechner 14 (Sendeaktion 66). Gleichzeitig mit dem Laden und Darstellen der empfangenen Internetseite 26 im Browserfenster 18 wird das als Java-Applet ausgestaltete Steuerprogramm 28 vom Browser geladen, kompiliert, initialisiert und gestartet (Schritt 68). Dabei wird bereits eine erste Animationssequenz direkt mit dem Applet geladen und im Browserfenster 18 dargestellt.

Sobald die bereits im Zusammenhang mit Fig. 2 beschriebenen Module des Steuerprogramms 28 gestartet sind, laufen im wesentlichen zwei Vorgänge parallel ab, wie dies in Fig. 3 durch zwei getrennte Ablaufstränge 70, 72 angedeutet ist.

Der erste Ablaufstrang 70 betrifft das Laden aller zur Verfügung stehenden Kurzanimationen 30 in den Arbeitsspeicher des Benutzerrechners 14. Dieser Vorgang wird im wesentlichen von dem Server-Verbindungsmanager 32 im Zusammenspiel mit dem Animationsmanager 34 ausgeführt. Zusammen mit dem Steuerprogramm 28 wurden bei der Übertragung der Internetseite 26 Informationen über die für diese Seite zur Verfügung stehenden Kurzanimationen 30 übermittelt. Neben anderen Daten ist in diesen Informationen eine Prioritätsreihenfolge der Kurzanimationen 30 enthalten. Aufgabe des Animationsmanager 34 ist es nun, innerhalb des ersten Ablaufstranges 70 das Herunterladen der Kurzanimationen 30 gemäß der Prioritätsreihenfolge zu koordinieren und zu überwachen. Im hier beschriebenen Ausführungsbeispiel sind die Kurzanimationen 30 über den Server 10 verfügbar, aber in Ausführungsvarianten können die Kurzanimationen 30 auch von anderen Servern angefordert und heruntergeladen werden.

Zum Herunterladen der Kurzanimationen 30 arbeitet der Animationsmanager 34 die Liste der gewünschten Animationen in der Reihenfolge ihrer Priorität ab. Der Server-Verbindungsmanager 32 stellt aufgrund der Anforderungen des Animationsmanagers 34 eine Serververbindung zu dem Server 10 her (Sendeaktion 74). Der Server 10 greift daraufhin in Schritt 76 auf die im Massenspeicher 16 enthaltenen Kurzanimationen 30 zu und überträgt diese in einem Strom-Datenformat (streaming data format) an den Benutzerrechner 14 (Sendeaktion 78). Insgesamt soll die Übertragung der Kurzanimationen 30 über die bestehende Netzwerkverbindung im Hintergrund ablaufen, ohne den Benutzer zu stören. Die dazu eingesetzten Übertragungsverfahren sind an sich bekannt und sind nicht Gegenstand der vorliegenden Erfindung. Im einfachsten Fall können Standardfunktionen der hier verwendeten Internet-Protokolle eingesetzt werden.

Im Ergebnis werden somit in Schritt 80 durch den Animationsmanager 34 im Zusammenwirken mit dem Server-Verbindungsmanager 32 die zur Verfügung stehenden Kurzanimationen 30 (d.h. Bildsequenzen) über das Computernetzwerk 12 heruntergeladen und im Arbeitsspeicher des Benutzerrechners 14 abgelegt. Dieses Herunterladen erfolgt in der vorgegebenen Prioritätsreihenfolge der Kurzanimationen 30. Immer wenn eine weitere Kurzanimation 30 verfügbar ist, trägt der Animationsmanager 34 einen entsprechenden Vermerk in die Animationsliste ein und schickt eine Nachricht an den Anzeigemanager 36, so daß der Anzeigemanager 36 ständig aktuelle Informationen über die zur Verfügung stehenden Kurzanimationen 30 vorliegen hat.

Das Herunterladen der Kurzanimationen 30 in Schritt 80 wird so lange fortgesetzt, bis alle vom Anbieter der Internetseite 26 vorgesehenen Kurzanimationen 30 in den Arbeitsspeicher des Benutzerrechners 14 geladen sind.

Die folgende Tabelle zeigt beispielhaft eine Auflistung der für eine animierte Figur mit dem Namen "Till" vorgesehenen Kurzanimationen. In diesem Beispiel umfassen alle Kurzanimationen zusammen insgesamt 209 Einzelbilder ("Frames"). Die linke Spalte gibt das Einzelbild an, mit dem die Kurzanimation beginnt. Die mittlere Spalte enthält den Namen der Kurzanimation, und die rechte Spalte gibt an, aus welchen Einzelbildern sich die Kurzanimation zusammensetzt. Beispielsweise beginnt die Kurzanimation "ZeigenR" mit dem Einzelbild 60 und umfaßt insgesamt 21 Bilder bis zum Einzelbild 80:

| Till: Start | Name | Einzelbilder |
|---|---|---|
| 1 | Winken | 1-20 |
| 20 | Reden1 | 20-24, (25-34)*, 35-40 |
| 40 | ZeigenL | 40-60 |
| 60 | ZeigenR | 60-80 |
| 80 | Boese | 80-100 |
| 100 | Reden2 | 100-120 |
| 120 | Timeout | 120-140 |
| 140 | Suchen | 140-170 |
| 170 | Lesen | 170-175, (176-190)*, 193-200 |
| 200 | Schreiben | 200-209, (210-224)*, 209-200 |

Die Kurzanimation "Reden1" enthält eine Schleife, die so lange wiederholt wird, wie die Ausgabe eines die Animation begleitenden Textes dauert. Es werden also zunächst die Einzelbilder 20 bis 24 angezeigt, dann die Einzelbilder 25 bis 34 so lange zyklisch durchlaufen, bis die Sprach- oder Textausgabe beendet ist, und abschließend die Einzelbilder 35 bis 40 angezeigt. Auch diese prinzipiell beliebig lange Darstellung wird im vorliegenden Ausführungsbeispiel als "Kurzanimation" bezeichnet, weil sie nur aus relativ wenigen (hier 21) unterschiedlichen Einzelbildern besteht.

Der zweite in Fig. 3 dargestellte Ablaufstrang 72 wird durch das Zusammenwirken des Anzeigemanagers 36, des Text/Sprach-Managers 38 und des Parsers 40 ausgeführt. Unmittelbar nachdem diese drei Module in Schritt 68 geladen und gestartet worden sind, steht dem Benutzer die Möglichkeit einer Interaktion mit der dargestellten animierten Figur F (Fig. 1) zur Verfügung. Dazu weist die in dem Browserfenster 18 angezeigte Internetseite 26 ein Formularfeld auf (in Fig. 1 nicht gezeigt), in das der Benutzer über die Tastatur 22 Text eingeben kann. Der eingegebene Text wird durch Betätigen eines "Absende"-Knopfes auf der Internet-seite 26 an das Steuerprogramm 28 gesendet (Benutzereingabe 82).

Über die Eingabeschnittstelle 50 gelangt der Text an den Parser 40. Der Parser 40 wertet die Texteingabe in Schritt 84 durch einen Schlüsselwortvergleich aus. Für diesen Auswertevorgang sind in unterschiedlichen Ausführungsvarianten der Erfindung diverse unterschiedliche Strategien vorgesehen. Im einfachsten Fall kann zum Beispiel der Parser 40 lediglich nach vorgegebenen Schlüsselwörtern oder Schlüsselwortgruppen suchen.

Im hier beschriebenen Ausführungsbeispiel ist für den Analysevorgang in Schritt 84 vorgesehen, daß der vom Benutzer eingegebene Text durch den Parser 40 Wort für Wort mit einer dem Steuerprogramm 28 vorliegenden Schlüsselwort-Liste verglichen wird. Der eingegebene Text wird von links nach rechts durchlaufen, wobei alle mit der Schlüsselwort-Liste übereinstimmenden Wörter markiert werden. Gibt es mehrere Treffer, so gewichtet der Parser 40 die entsprechenden Wörter nach einer innerhalb der Schlüsselwort-Liste festgelegten Rangfolge und trifft somit eine Entscheidung, welches Wort oder welche Wörter für die Reaktion der in dem Browserfenster 18 dargestellten Figur F relevant ist. In der Schlüsselwort-Liste können auch Wörter enthalten sein, auf die der Parser 40 nicht reagieren soll, und es können Synonyme bzw. Wortgruppen erfaßt werden, auf die die angezeigte Figur F einheitlich reagieren soll (z.B. auf Schimpfwörter).

Die Informationen der gerade beschriebenen Schlüsselwort-Liste sind in einem Skript enthalten, das entweder zusammen mit dem Steuerprogramm 28 zum Benutzerrechner 14 gesendet wird oder unter Steuerung des bereits laufenden Steuerprogramms 28 vom Server 10 geladen wird (ähnlich wie die Kurzanimationen 30). Das Skript kann als eine einzige Datei vorliegen oder in mehreren Dateien verteilt sein. In dem Skript ist ferner definiert, wie die Zuordnung der Schlüsselwörter zu den einzelnen Aktionen erfolgt, und es die Aktionen definiert, die von der angezeigten Figur F ausgeführt werden sollen. So kann z.B. im Skript die folgende beispielhafte Definition einer Aktion "SAY_NAME" enthalten sein:

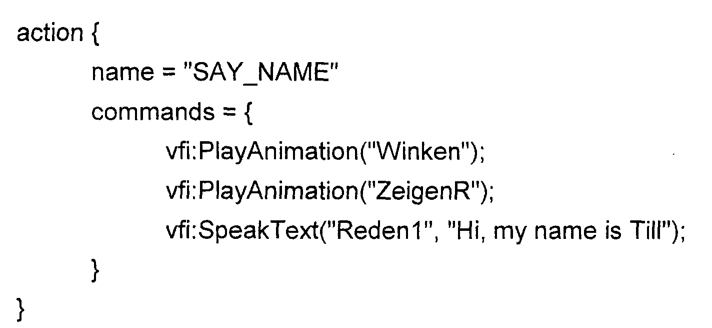

Beispielsweise kann der Benutzer in Schritt 82 die folgende Frage eingeben:
"Hello, virtual friend, what's your name?"

Bei der Analyse dieser Frage in Schritt 84 werden dann, bei einer beispielhaft angenommenen Schlüsselwort-Liste, die Schlüsselworte "Hello" und "name" gefunden. Unter Berücksichtigung der Priorität dieser Schlüsselworte könnte durch das Skript definiert sein, daß als Reaktion die Aktion "SAY_NAME" auszuführen ist. Die Definition dieser Aktion wird aus dem Skript ausgelesen und daraus in Schritt 86 die Animationssequenz "Winken", "ZeigenR", "Reden1" bestimmt.

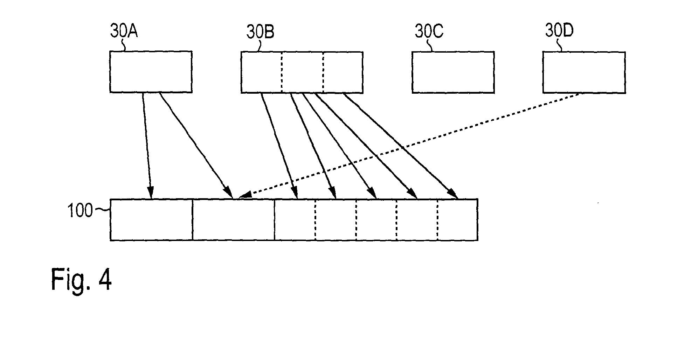

Die in Schritt 86 bestimmte Animationssequenz wird vom Parser 40 an den Anzeigemanager 36 übergeben. Der Anzeigemanager 36 ist für alle darstellenden Vorgänge innerhalb des Steuerprogramms 28 zuständig. Insbesondere greift er auf die bereits gespeicherten Kurzanimationen 30 zu (Schritt 88) und sorgt für deren Darstellung im Browserfenster 18 (Schritt 90). Soll auf eine-Kurzanimation 30 zugegriffen werden, die noch nicht in den Arbeitsspeicher des Benutzerrechners 14 geladen ist, so weicht der Anzeigemanager 36 statt dessen auf eine bereits vorhandene Animation aus, wie dies unten noch im Zusammenhang mit Fig. 4 genauer erläutert werden wird. Dadurch wird eine unmittelbare und ununterbrochene Reaktion der in dem Browserfenster 18 dargestellten Figur F auf Benutzereingaben sichergestellt.

Die oben beispielhaft angegebene Aktion "SAY_NAME" enthält neben der Animationssequenz noch eine Text- oder Sprachausgabe, nämlich die Worte "Hi, my name ist Till". Abhängig davon, ob eine Sprachsyntheseroutine verfügbar ist, wird diese Ausgabe entweder an den Anzeigemanager 36 (und dort an das Untermodul für Sprechblasendarstellung 44) oder an den Text/Sprach-Manager 38 geleitet. Ist keine Sprachausgabe möglich, so wird die Ausgabe vom Anzeigemanager 36 als Textantwort in Form einer Sprechblase zusammen mit der dargestellten animierten Figur F im Browserfenster 18 angezeigt. Bei längeren Antworten wird der Text als laufender Text in der Sprechblase dargestellt (scrolling). Ist eine Sprachausgabesoftware auf dem Benutzerrechner 14 vorhanden, so stellt der Text/Sprach-Manager 38 eine Verbindung über die Ausgabeschnittstelle 48 her und sendet die Ausgabedaten an die Sprachausgabesoftware weiter, die ihrerseits den Text als natürliche Sprache über die Soundkarte des Benutzerrechners 14 ausgibt.

Neben dem Abspielen einer Animation und der Text- oder Sprachausgabe können Aktionen ferner eine Reihe weiterer Befehle enthalten, insbesondere Befehle zum Sprung auf andere Internetseiten.

Mit einem Durchlauf der Schritte 82 - 90 ist ein Eingabe-Reaktions-Zyklus beendet. Innerhalb des zweiten Ablaufstrangs 72 wird dieser Zyklus so lange wiederholt, bis der Benutzer die aufgerufene Internetseite 28 verläßt. Die erste solche Wiederholung ist in Fig. 3 durch eine weitere Benutzereingabe 82', eine weitere Eingabeanalyse 84' etc. angedeutet.

In Abwandlungen des oben beschriebenen Ausführungsbeispiels ist neben dem relativ einfachen Parser 40 noch ein komplexes Erkennungs- und Datenbankmodul auf dem Server 10 installiert. Benutzereingaben 82, die vom Parser 40 nicht eindeutig interpretiert werden können, werden dann über das Computernetzwerk 12 an dieses Erkennungs- und Datenbankmodul geleitet und dort mit aufwendigen Such- und Analyseverfahren, die Techniken der künstlichen Intelligenz benutzen, verarbeitet. Entsprechendes gilt für Fragen, deren Beantwortung externe Datenbankzugriffe erfordert (z.B. die Frage nach dem Preis eines Produkts aus einem umfangreichen Angebot oder nach der Lieferbarkeit). Das Ergebnis einer solchen Anfrage bei dem Erkennungs- und Datenbankmodul wird wieder über das Computernetzwerk 12 an das Steuerprogramm 28 geleitet, um dort die Reaktion der dargestellten Figur F entsprechend zu beeinflussen.

In Fig. 4 ist nochmals der Zusammenhang zwischen den einzelnen Kurzanimationen 30A, 30B, 30C, 30D (im folgenden auch wieder einfach als 30 bezeichnet) und der in dem Browserfenster 18 angezeigten Animationssequenz 100 veranschaulicht. Es wird hierbei angenommen, daß die Kurzanimationen 30 in der Reihenfolge der obigen Beispieltabelle priorisiert sind und daher in Schritt 80 (Fig. 3) in dieser Reihenfolge in den Arbeitsspeicher des Benutzerrechners 14 geladen werden. Somit bezeichnet Bezugszeichen 30A die Kurzanimation "Winken", Bezugszeichen 30B bezeichnet die Kurzanimation "Reden1", Bezugszeichen 30C bezeichnet die Kurzanimation "ZeigenL" und Bezugszeichen 30D bezeichnet die Kurzanimation "ZeigenR". Die gestrichelten Linien der Kurzanimation 30B stellen deren Startabschnitt (Einzelbilder 20-24), Schleifenabschnitt (Einzelbilder 25-34) bzw. Endabschnitt (Einzelbilder 35-40) dar.

Unter Steuerung der ebenfalls bereits beispielhaft angegebenen Aktionsdefinition "SAY_NAME" soll nun eine Animationssequenz 100 angezeigt werden, die in unmittelbarer Abfolge die Kurzanimationen "Winken", "ZeigenR" und "Reden1" (30A, 30D und 30B) aufweist. Der Zugriff auf die Kurzanimation 30A in Schritt 88 und deren Anzeige in Schritt 90 sind unproblematisch. Die eigentlich daraufhin vorgesehene Kurzanimation 30D ist jedoch zu dem Zeitpunkt, zu dem sie angezeigt werden soll, noch nicht in den Arbeitsspeicher des Benutzerrechners 14 geladen (in Fig. 4 durch einen gestrichelten Pfeil dargestellt). Der Anzeigemanager 36 ersetzt daher in der tatsächlich angezeigten Animationssequenz 100 die noch nicht geladene Kurzanimation 30D durch die bereits vorhandene Kurzanimation 30A, die eine ähnliche Länge aufweist und als Animation hoher Priorität universell einsetzbar ist.

Die darauffolgende Anzeige der Kurzanimation 30B wird durch die Ausgabe des Texts "Hi, my name is Till" entweder als Lauftext in einer Sprechblase oder durch eine Sprachausgabe begleitet. Der Anzeigemanager 36 wiederholt hier den mittleren Schleifenabschnitt (Einzelbilder 25-34) der Kurzanimation 30B so oft, daß genügend Zeit für die Sprachausgabe bzw. das Durchlaufen des angezeigten Texts zur Verfügung steht.

Insgesamt wird durch diese Techniken mit geringem Aufwand eine interaktive und den Benutzer fesselnde Darstellung einer animierten Figur F erreicht, die die Attraktivität eines Internetangebots erheblich steigert. Diverse weitere Abwandlungen und weitere Kombinationen der oben beispielhaft beschriebenen Merkmale sind für den Fachmann offensichtlich.

## Patentansprüche

1. Verfahren zum Anzeigen einer animierten, auf Benutzereingaben reagierenden Darstellung (F) in einem Browserfenster (18) eines an ein Computernetzwerk (12) angeschlossenen Benutzerrechners (14), mit den Schritten:
a) Laden (80) mehrerer Kurzanimationen (30) über das Computernetzwerk (12),
b) Analysieren (84) einer Benutzereingabe (82) und Zuordnen (86) dieser Benutzereingabe (82) zu einer Animationssequenz (100), die mehrere Kurzanimationen (30) aufweist,
c) Zugriff (88) auf die Kurzanimationen (30) der Animationssequenz (100) und Anzeigen (90) der Animationssequenz (100) als animierte Darstellung (F) in dem Browserfenster (18).

2. Verfahren nach Anspruch 1, mit dem vorbereitenden Schritt des Ladens (68) eines Steuerprogramms (28) über das Computernetzwerk (12), wobei das Steuerprogramm (28) vorzugsweise ein von einem Browser des Benutzerrechners (14) ausführbares Java-Applet ist.

3. Verfahren nach Anspruch 1 oder Anspruch 2, bei dem das Steuerprogramm (28) und/oder die mehreren Kurzanimationen (30) zumindest bei jeder Benutzersitzung erneut geladen wird/werden.

4. Verfahren nach Anspruch 2 oder Anspruch 3, bei dem das Laden der Kurzanimationen (30) über das Computernetzwerk (12) von dem vorab geladenen Steuerprogramm (28) gesteuert wird

5. Verfahren nach einem der Ansprüche 1 bis 4, bei dem Schritt a) zumindest zum Teil parallel oder quasi-parallel mit den Schritten b) und c) ausgeführt wird.

6. Verfahren nach einem der Ansprüche 1 bis 5, bei dem eine in der Animationssequenz (100) vorgesehene Kurzanimation (30), die nicht oder noch nicht über das Computernetzwerk (12) geladen worden ist, durch eine bereits geladene Kurzanimation (30) ersetzt wird.

7. Verfahren nach einem der Ansprüche 1 bis 6, bei dem die Zuordnung der Benutzereingabe (82) zu der Animationssequenz (100) über mindestens ein Skript erfolgt, das Schlüsselwörter der Benutzereingabe (82) einer wiederzugebenden Animationssequenz (100) zuordnet.

8. Verfahren nach einem der Ansprüche 1 bis 7, bei dem die Benutzereingabe (82) ferner zu einer Ausgabe zugeordnet wird, und bei dem diese Ausgabe zusammen mit der animierten Darstellung (F) angezeigt oder wiedergegeben wird.

9. Computerprogrammprodukt, insbesondere Applet, zur Ausführung durch einen Browser eines an ein Computernetzwerk (12) angeschlossenen Benutzerrechners (14), zum Anzeigen einer animierten, auf Benutzereingaben reagierenden Darstellung (F) in einem Browserfenster (18) des Benutzerrechners (14), wobei das Computerprogrammprodukt Befehle aufweist, die den Benutzerrechner (14) dazu veranlassen, das Verfahren gemäß einem der Ansprüche 1 bis 8 auszuführen.

10. Vorrichtung mit mindestens einem Allzweckcomputer, wobei der mindestens eine Allzweckcomputer so programmiert ist, daß er ein Verfahren gemäß einem der Ansprüche 1 bis 8 ausführt.
